# EUROPÄISCHE PATENTSCHRIFT

(11) **EP 3 540 921 B1**
(45) Veröffentlichungstag und Bekanntmachung des Hinweises auf die Patenterteilung: **30.06.2021**
(21) Anmeldenummer: 18161440.5
(22) Anmeldetag: 13.03.2018
(51) Int. Cl.: H02K 7/18

(54) **ENERGIEWANDLER UND SYSTEM ZUR ERZEUGUNG VON ELEKTRISCHER ENERGIE IN EINEM ROLLENDEN RAD EINES FAHRZEUGS**
ENERGY CONVERTER AND SYSTEM FOR GENERATING ELECTRICAL ENERGY IN A ROLLING WHEEL OF A VEHICLE
CONVERTISSEURS D'ÉNERGIE ET SYSTÈME GÉNÉRATION D'ÉNERGIE ÉLECTRIQUE DANS UNE ROUE ROULANTE D'UN VÉHICULE

(43) Veröffentlichungstag der Anmeldung: 18.09.2019
(73) Patentinhaber: HVD AG, 9495 Triesen (LI)
(72) Erfinder: Grabher, Karl-Heinz, 9490 Vaduz (LI); von Schuttenbach, Andreas, 85051 Ingolstadt (DE)
(74) Vertreter: Kaminski Harmann

(56) Entgegenhaltungen:
- WO-A1-2015/005618
- WO-A1-2015/054763
- WO-A1-2017/078640

## Beschreibung

Die Erfindung betrifft einen Energiewandler und ein System zur Erzeugung von elektrischer Energie in einem rollenden Rad eines Fahrzeugs unter Ausnutzung der elastischen Verformung des Rades zwischen Fahrebene und Mittelachse des Rades (Ausnutzung der Walkarbeit des Reifens).

Fahrzeugreifen, insbesondere Vollgummi- oder Luftreifen, werden im Rahmen des Abrollvorgangs unter Belastung im Bereich der Auflagefläche in ihrem Querschnitt verformt. Dabei wird der Reifen gewalkt und es entsteht Reibungswärme. Die dabei geleistete Arbeit wird Walkarbeit genannt.

Die benötigte Kraft für das Walken des Reifens ist eine Hauptkomponente des Rollwiderstandes und wirkt entgegen der Antriebskraft eines Fahrzeuges. Einerseits bewirkt eine erhöhte Walkarbeit also direkt einen erhöhten Kraftstoffverbrauch des Fahrzeuges und kann ferner auch die Lebensdauer des Reifens herabsetzen. Andererseits sind eine gewisse Verformung des Reifens und damit eine Erhöhung der Auflagefläche des Reifens auf dem Boden zwecks Erhöhung des Traktionskoeffizienten des Fahrzeuges und auch zwecks Erhöhung des Fahrkomforts durchaus erwünscht. Beispielsweise wird deshalb der Luftdruck in einem Luftreifen als Kompromiss zwischen einer Reduktion der Walkarbeit, der Traktion des Fahrzeuges und typischerweise auch den Bedürfnissen des Fahrers des Fahrzeugs eingestellt.

Die als Reibwärme verpuffende Energie aus der Walkarbeit des Reifens ist neben dem Luftwiderstand eine der Hauptkomponenten des Energieverlusts bei einem Fahrzeug. Insbesondere im Bereich der Elektroautos wird deshalb bereits seit einigen Jahren die Entwicklung von Systemen zur Rekuperation (Energierückgewinnung, insbesondere zur Versorgung der Fahrzeugbatterie) basierend auf einer Ausnutzung der Walkarbeit von Fahrzeugreifen vorangetrieben.

Im Stand der Technik sind verschiedene Verfahren und Systeme zur Energiegewinnung am oder im Fahrzeugreifen bekannt, hauptsächlich zur Versorgung diverser im Reifen angeordneter Reifenüberwachungssensoren mit elektrischer Energie, beispielsweise Reifendrucksensoren.

Oft wird für solche Systeme beispielsweise eine Anordnung von Piezoelementen verwendet, konfiguriert um bei Einwirkung einer durch die Verformung des Reifens erzeugten Kraft auf die einzelnen Piezoelemente elektrische Spannung zu erzeugen. Dadurch können im Reifen angeordnete Sensoren energieautark betrieben werden, was beispielsweise den Wartungsaufwand reduziert.

Zum Beispiel wird ein piezoelektrisches Quarzelement derart im Reifen angeordnet, dass es jeweils belastet wird, wenn es sich zwischen Fahrbahn und Radnabe befindet, womit durch die Rollbewegung des Rades Strom erzeugt werden kann. Beispielsweise werden solche piezoelektrischen Elemente an der Innenfläche des Reifens angebracht oder im Reifenmantel integriert.

Systeme aus dem Stand der Technik, insbesondere piezobasierte Systeme, haben jedoch oft den Nachteil, dass die Energieausbeute nur bedingt beziehungsweise gar nicht zur Versorgung der Fahrzeugbatterie ausreicht. Ein Grund liegt beispielsweise darin, dass Piezoelemente typischerweise zur Energiegewinnung basierend auf einer mechanischen Kraft über eine kurze Wirkdistanz, z.B. wenige Millimeter oder Mikrometer, optimiert sind. Verglichen zu diesem optimalen Einsatzgebiet von Piezoelementen ist die Verformung der Lauffläche eines Fahrzeugreifens jedoch bis zu einer Grössenordnung grösser und kann beispielsweise bis zu 20 Millimeter oder mehr betragen.

Grundsätzlich bestehen bei bestehenden Systemen aus dem Stand der Technik also typischerweise verschiedene Zielkonflikte, beispielsweise zwischen einem Ausmass der Verformung des Rades für eine optimale Energiegewinnung und einer Erhöhung des Traktionskoeffizienten des Fahrzeuges, zwischen einer Herabsetzung des Rollwiderstandes und der Energieausbeute, sowie zwischen der Energieausbeute und der Einstellung eines gewünschten des Fahrkomforts.

In dem Dokument WO 2015/005618 A1 wird ein System zur Erzeugung elektrischer Energie aus der Verformung eines Reifens des Rads eines fahrenden Fahrzeugs beschrieben. Das System umfasst einen in der Mitte des Rads rings um die Radachse angeordneten zentrischen Generator und mehrere radial zwischen dem zentrischen Generator und der Lauffläche des Reifen angeordnete Antriebseinheiten, welche die Verformungsbewegung des Reifens in eine Rotationsbewegung eines Rotors des zentrischen Generators umlenken. Die Antriebseinheiten setzen sich jeweils aus einem Stift, der mit der Innenseite der Lauffläche verbunden ist, einem Hebel, der einenends ein um eine Drehachse schwenkbar gelagertes erstes Zahnrad aufweist und anderenends mit dem Stift gelenkig verbunden ist, einem Einweglager sowie einem zweiten Zahnrad zwischen dem ersten Zahnrad und dem Rotor des Generators zusammen, sodass eine durch die Verformung des Reifens erzeugte Bewegung des Stifts über Drehbewegungen des ersten Zahnrads und des zweiten Zahnrads eine Rotation des Rotors des zentrischen Generators bewirken.

Aus dem Dokument WO 2015/054763 A1 ist ein ringförmiger zentrischer Generator zur Anordnung innerhalb eines Rads eines Fahrzeugs bekannt. Der Generator hat einen um die Radachse drehbar gelagerten, ringförmigen Rotor. Mittels mehrerer Schwenkhebel, die jeweils einenends die Lauffläche des Reifens innenseitig berühren und anderenends über eine Zahnverbindung schwenkbar gelagert mit dem Rotor in Eingriff stehen, wird der ringförmige Rotor bei Verformung der Lauffläche in Rotation um die Radachse versetzt.

Die WO 2017/078640 A1 beschreibt ein System zur Erzeugung elektrischer Energie für eine Reifenluftdrucküberwachung. Das System umfasst eine um ihre eigene Achse rotierbare Scheibe, einen Spannbügel, der einenends die Scheibe und anderenends die Innenseite des Reifens berührt, eine Feder zur Aufrechterhaltung der Spannung des Spannbügels auf den Reifen, sowie einen mit der rotierbaren Scheibe gekoppelten Dynamo zur Erzeugung elektrischer Energie bei Rotation der Scheibe durch Bewegung der Lauffläche aufgrund Verformung des Reifens.

Es ist eine Aufgabe der vorliegenden Erfindung, eine verbesserte Vorrichtung zur Erzeugung von elektrischer Energie in einem rollenden Rad eines Fahrzeugs unter Ausnutzung der elastischen Verformung des Rades im Rahmen des Abrollvorgangs bereitzustellen.

Eine spezielle Aufgabe der vorliegenden Erfindung liegt dabei insbesondere darin, eine Vorrichtung zur Rekuperation zur Verfügung zu stellen, welche eine gegenüber dem Stand der Technik erhöhte Energierückgewinnung aus der elastischen Verformung eines Fahrzeugrades ermöglicht. Diese Aufgaben werden durch die Verwirklichung der Merkmale des unabhängigen Anspruchs 1 gelöst. Merkmale, die die Erfindung in alternativer oder vorteilhafter Weise weiterbilden, sind den abhängigen Patentansprüchen zu entnehmen.

Die Aufgaben werden erfindungsgemäss gelöst mittels einer Kombination eines elektrischen Generators, aufweisend einen Rotor und einen Stator, und einer mechanischen Aufnahmeeinheit, wobei die mechanische Aufnahmeeinheit eine Drehachse aufweist und für eine derartige Anordnung in einem Rad für ein Fahrzeug konfiguriert ist, dass eine Verformung der Lauffläche hin zur Mittelachse des Rades durch die mechanische Aufnahmeeinheit erfasst und in eine Drehbewegung der Drehachse in eine Pump-Drehrichtung gewandelt wird. Dabei sind die mechanische Aufnahmeeinheit und der elektrische Generator derart angeordnet und konfiguriert, dass die durch die mechanische Aufnahmeeinheit erzeugte Drehbewegung der Drehachse in Pump-Drehrichtung auf den Rotor des elektrischen Generators übertragen und vom elektrischen Generator in elektrische Energie gewandelt wird.

Die Erfindung betrifft einen Energiewandler zur Erzeugung von elektrischer Energie in einem rollenden Rad eines Fahrzeugs unter Ausnutzung der elastischen Verformung des Rades zwischen Fahrebene und Mittelachse des Rades. Der Energiewandler weist dabei ein Hebelelement mit einem um eine Drehachse drehbar gelagerten Ausleger auf, wobei das Hebelelement für eine derartige Anordnung in einem Rad für ein Fahrzeug konfiguriert ist, dass eine Verformung der Lauffläche hin zur Mittelachse des Rades eine auf eine Kontaktfläche des Auslegers wirkende Kraft erzeugt, und die auf die Kontaktfläche wirkende Kraft eine Drehbewegung des Auslegers in eine Pump-Drehrichtung um die Drehachse bewirkt.

Obwohl nicht darauf beschränkt, ist unter Drehbewegung des Auslegers typischerweise eine Teildrehung (Schwenkbewegung) des Auslegers um die Drehachse zu verstehen. Das Hebelelement ist also insbesondere speziell darauf ausgelegt, im Rahmen des Abrollvorgangs des belasteten auf einer im Wesentlichen ebenen Fahrebene rollenden Rads entstehende Verformungen des Radquerschnitts im Bereich der Auflagefläche zu erfassen und in eine Drehbewegung um die Drehachse zu übertragen. Zumindest bis zu einem gewissen Grad kann das Hebelelement aber auch Stösse durch Fahrbahnunebenheiten und/oder durch herumliegende harte Gegenstände auf der Fahrbahn erfassen und in eine Drehbewegung um die Drehachse übertragen.

Das Hebelelement weist also zum Einbau in ein Fahrzeugrad spezifisch dafür vorgesehene Schnittstellen auf, beispielsweise zur Kopplung oder Fixierung des Hebelelements an eine Felge oder einen Reifen des Rades, so dass beim eingebautem Hebelelement eine durch eine Radverformung bedingte Drehbewegung des Auslegers um die Drehachse bewirkt werden kann.

Zum Beispiel ist das Hebelelement bezüglich seiner Schnittstellen und in seiner Grösse und Form derart für einen definierten Radtyp konfiguriert, dass die Kontaktfläche des Auslegers bei eingebautem Hebelelement in unmittelbarer Nähe zu einer Reifeninnenfläche des Rades angeordnet ist oder in ständigem Kontakt zur Reifeninnenfläche steht.

Gemäss einer Ausführungsform des Energiewandlers ist dieser bzw. das Hebelelement also derart konfiguriert, dass die Kontaktfläche des Auslegers ausgelegt ist zur Herstellung eines Kontakts mit einer Reifeninnenfläche des Rades, insbesondere wobei die Kontaktfläche ausgelegt ist zur Herstellung eines Kontakts mit einem Teil einer flexiblen Speichenstruktur des Rades, oder dass die Kontaktfläche des Auslegers zumindest einen Teil der Lauffläche des Rades bildet.

Ferner weist der Energiewandler eine Freilauf-Drehkupplung auf, konfiguriert zur drehrichtungsabhängigen Kupplung, d.h. aufweisend eine Kupplungsrichtung zur Herstellung einer wirkenden Kupplung und eine Freilaufrichtung, sowie einen elektrischen Generator mit einem Rotor und einem Stator, wobei der elektrische Generator konfiguriert ist zur Wandlung von Bewegungsenergie einer Drehung des Rotors in elektrische Energie.

Gemäss der vorliegenden Erfindung sind das Hebelelement, die Freilauf-Drehkupplung und der elektrische Generator derart angeordnet und konfiguriert, dass die Drehbewegung des Auslegers in Pump-Drehrichtung über die Freilauf-Drehkupplung in Kupplungsrichtung auf den Rotor des elektrischen Generators übertragen und vom elektrischen Generator in elektrische Energie gewandelt wird.

Zum Beispiel weist der Energiewandler gemäss einer weiteren Ausführungsform ein Vorspannmittel auf, insbesondere eine Feder, konfiguriert um den Ausleger um die Drehachse in Freilaufrichtung der Freilauf-Drehkupplung und insbesondere mit der Kontaktfläche in Richtung zur Lauffläche vorzuspannen. Beispielsweise ist dabei die Freilauf-Drehkupplung als eine mit der Drehachse zusammenwirkende Freilaufnabe ausgebildet, wobei der elektrische Generator derart konfiguriert ist, dass sich der Rotor ausserhalb oder innerhalb eines feststehenden Stators dreht, wobei die Bewegungsenergie des Rotors mittels elektrischer Induktion in elektrische Energie gewandelt wird.

Damit der elektrische Generator beispielsweise bereits durch relativ geringe Auslenkungen des Auslegers angetrieben wird, weist der Energiewandler gemäss einer weiteren Ausführungsform ein Getriebe auf, konfiguriert zum Erzeugen einer definierten Übersetzung zwischen der Drehbewegung des Auslegers in Pump-Drehrichtung und einer Drehbewegung des Rotors des elektrischen Generators. Zum Beispiel ist das Getriebe dabei konfiguriert, zwischen der Drehbewegung des Auslegers und der Drehbewegung des Rotors eine Übersetzung ins Schnelle zu erzeugen, insbesondere eine Übersetzung von mindestens einem Verhältnis 1 zu 10, im Speziellen von mindestens einem Verhältnis 1 zu 100.

Die Verformung der Lauffläche im Bereich der Auflagefläche des Rades auf der Fahrbahn kann durch das Gewicht eines Personenfahrzeugs im Stillstand zum Beispiel bis zu 20 Millimeter oder mehr betragen, wobei sich ferner der radiale Abstand zwischen Mittelachse und Lauffläche während der Fahrt durch Fliehkraft allgemein auf der Seite mit dem Boden weniger und auf der gegenüberliegenden Seite deutlich mehr vergrössert. Während der Fahrt bildet das Rad also eine rotierende Ellipse, wobei der Reifen bei jeder Umdrehung und bei jeder Unebenheit eine Verformung erfährt, so dass der elektrische Generator durch das Hebelelement regelrecht aufgepumpt wird.

Je nach Ausführungsform des Rades und insbesondere abhängig von der Anordnung des Energiewandlers im im Rad eingebauten Zustand könnten beispielsweise übermässige Stösse und/oder übermässige Verformungen der Lauffläche des Rades den Energiewandler beschädigen. Gemäss einer weiteren Ausführungsform des Energiewandlers ist deshalb ein, mit einem maximalen Kraftwert der auf die Kontaktfläche wirkenden Kraft verknüpfter, maximaler Belastungswert der Freilauf-Drehkupplung und/oder des elektrischen Generators und/oder eines Drehlagers - mittels welchem der Ausleger drehbar gelagert ist - und/oder insbesondere des Getriebes vorgegeben, wobei der Ausleger in Richtung der auf die Kontaktfläche wirkenden Kraft eine derartige Elastizität aufweist, dass sich der Ausleger innerhalb eines Toleranzbereichs vor Erreichen des maximalen Kraftwerts elastisch verformt und der maximale Belastungswert stets unterschritten bleibt.

Die Erfindung betrifft ferner ein System zur Erzeugung von elektrischer Energie in einem rollenden Rad eines Fahrzeugs, wobei das System einen wie oben beschriebenen Energiewandler sowie eine Trägerstruktur aufweist, wobei die Trägerstruktur konfiguriert ist, den Energiewandler in einer fixen Anordnung um die Mittelachse des Rades zu halten.

Zum Beispiel weist das System eine Vielzahl von Energiewandlern auf und die Trägerstruktur ist konfiguriert, um die Vielzahl von Energiewandlern in einer ringförmigen gleichmässigen Anordnung zu fixieren. Um beispielsweise die Montage der Trägerstruktur an einer Felge oder den Ersatz von defekten Energiewandlern zu erleichtern, kann die Trägerstruktur gemäss einer weiteren Ausführungsform mehrere, d.h. mindestens zwei, separierbare Ringsegemente aufweisen, jeweils konfiguriert zum Fixieren von je einem Anteil der Vielzahl von Energiewandlern.

Insbesondere kann die Trägerstruktur selber als Felge des Rades ausgebildet sein oder das System weist eine - speziell für eine Kombination mit der Trägerstruktur vorgesehene - Felge auf, konfiguriert für eine fixierte Aufnahme der Trägerstruktur.

Gemäss einer weiteren Ausführungsform weist das System eine mehrteilige Felge auf, was beispielsweise zu einer Vereinfachung der Montage der Trägerstruktur im Rad bzw. in einem Reifen des Rades führen kann. Zum Beispiel ist die mehrteilige Felge ausgebildet als eine zweiteilige Felge mit einem Felgenbett und einer Felgenhülse oder als eine dreiteilige Felge mit einem Felgenbett, einer Felgenhülse und einem Felgenstern. In dem Fall können die Trägerstruktur und die mehrteilige Felge beispielsweise konfiguriert sein, dass die Trägerstruktur auf ein Felgenbett der mehrteiligen Felge montiert ist.

Anstelle einer Montage auf einer Felge kann die Trägerstruktur jedoch auch als Reifen des Rades ausgebildet sein, beispielsweise wobei der Reifen spezifische Aufnahme- und Fixierungsschnittstellen zur Anordnung der Vielzahl von Energiewandlern aufweist.

Ferner kann das System, beispielsweise in Kombination mit einer die Trägerstruktur haltenden spezifischen Felge, einen - spezifisch auf die Trägerstruktur oder einzelne Energiewandler abgestimmten - Reifen aufweisen, wobei die Trägerstruktur und der Reifen konfiguriert sind, dass durch eine Verformung der Lauffläche des Rades ein Kontakt zwischen der Kontaktfläche des Auslegers mit einer Reifeninnenfläche des Reifens hergestellt werden kann, insbesondere wobei zumindest ein Teil der Kontaktfläche des Auslegers mit einem Teil der Reifeninnenfläche in Kontakt steht.

Insbesondere ist die Erfindung nicht beschränkt auf eine Anwendung in herkömmlichen Luftreifen, sondern kann in weiteren im Stand der Technik bekannten Rad- und Reifentypen verwendet werden, beispielsweise Stahlreifen eines Schienenfahrzeugs oder Luftlos-Räder in Fahrzeugen für den Strassenverkehr.

Zum Beispiel kann eine Verwendung in einem Luftlos-Reifen, welcher eine flexible Speichenstruktur, beispielsweise eine elastische Polyurethan Struktur, aufweist von Vorteil sein, da die flexible Speichenstruktur gegenüber den Energiewandlern eine Dämpfungswirkung entfalten kann, so dass die Energiewandler bei übermässigen Verformungen des Reifens entlastet werden.

In einer weiteren Ausführungsform weist das System entsprechend einen Reifen mit einer Struktur von flexiblen Speichen auf und die Kontaktfläche des Auslegers und der Reifen sind konfiguriert zur Herstellung eines Kontakts von zumindest einem Teil der Kontaktfläche mit einem Teil der flexiblen Speichenstruktur.

Der erfindungsgemässe Energiewandler und das erfindungsgemässe System können auch in im Stand der Technik bekannten Rädern verwendet werden, welche nicht zwingend einen (Luft-)Reifen aufweisen oder deren Reifen jeweils nicht die ganze Lauffläche des Rades abdeckt. Entsprechend sind der Energiewandler und die Trägerstruktur gemäss einer weiteren Ausführungsform derart konfiguriert, dass die Kontaktfläche des Auslegers zumindest einen Teil der Lauffläche des Rades bildet.

Die erzeugte Energiemenge und/oder das Verhalten des Energiewandlers kann insbesondere über eine Steuerung der Belastung des elektrischen Generators beeinflusst werden.

Gemäss einer weiteren Ausführungsform weist das System eine Recheneinheit auf, konfiguriert zur Ansteuerung des elektrischen Generators, wobei die Recheneinheit konfiguriert ist, die Belastung des elektrischen Generators als Funktion eines Einstellparameters einzustellen. Zum Beispiel kann der Einstellparameter mindestens eines von folgendem umfassen: eine Rotationsgeschwindigkeit des Rades; eine Winkelbeschleunigung des Rades; Beschleunigungswert des Fahrzeugs, welcher insbesondere positiv oder negativ ("Verzögerung") sein kann, so dass der Generator beispielsweise für eine Beschleunigung oder Bremsung des Fahrzeuges unterschiedlich angesteuert wird; und ein Rekuperationsparameter einer vom elektrischen Generator aufgeladenen Batterie des Fahrzeugs, insbesondere ein Ladezustand der Batterie des Fahrzeugs.

Ein weiterer Aspekt der Erfindung bezieht sich darauf, dass bei Verwendung eines elektrischen Generators in einem Fahrzeugrad über die Belastung des Generators, d.h. durch Beeinflussung der vom Generator abgezogenen Strommenge, ein Drehwiderstand für eine Drehung des Rotors einstellbar ist. Dadurch kann eine mit dem elektrischen Generator gekoppelte mechanische Aufnahmeeinheit, beispielsweise das obig beschriebene Hebelelement des Energiewandlers, derart konfiguriert werden, dass dieses als Funktion der Belastung des elektrischen Generators einen Widerstand gegen die Verformung der Lauffläche hin zur Mittelachse des Rades ausübt. Entsprechend kann also über eine Steuerung der Belastung des elektrischen Generators die Verformung des Rades beeinflusst werden.

Entsprechend ist der elektrische Generator gemäss einer weiteren Ausführungsform konfiguriert, dass ein Drehwiderstand für eine Drehung des Rotors als Funktion der Belastung des elektrischen Generators einstellbar ist, und dass der Energiewandler konfiguriert ist, in Pump-Drehrichtung einen definierten Drehwiderstand des Auslegers als Funktion der Belastung des elektrischen Generators einzustellen.

Insbesondere ist die Recheneinheit konfiguriert, mittels des Einstellparameters einen definierten Rollwiderstand des Rades einzustellen, z.B. wobei der Einstellparameter mindestens eines von folgendem umfasst: ein Signal eines Antiblockiersystems des Fahrzeugs, insbesondere wobei das Signal des Antiblockiersystems indikativ ist für einen aktuellen Radschlupfwert des Rades, im Speziellen wobei das Signal des Antiblockiersystems indikativ ist für eine einzustellende Reifenhärte des Reifens für einen Soll-Radschlupfwert; ein Signal einer Fahrdynamikregelung des Fahrzeugs, insbesondere einer elektronischen Stabilitätskontrolle, im Speziellen wobei das Signal der Fahrdynamikregelung indikativ ist für eine einzustellende Reifenhärte des Reifens; und eine Soll-Reifenhärte des Reifens, beispielsweise zur Einstellung eines fahrerspezifischen Komfort-Werts.

Zum Beispiel kann das System also derart betrieben werden, dass der Reifen mit steigender Geschwindigkeit und grösserer Belastung des elektrischen Generators härter wird, was beispielsweise auch einen positiven Einfluss auf die Fahrstabilität hat. Ferner wird dadurch beispielsweise auch der Energieverbrauch des Fahrzeugs reduziert, da ein härterer Reifen eine kleinere Auflagefläche mit der Fahrebene aufweist. Hingegen wird bei einem Bremsvorgang, insbesondere einem abrupten und starken Bremsmanöver zur Vermeidung einer Gefahrensituation oder beispielsweise bei einer Ansteuerung einer spezifischen Bremseinstellung für ein einzelnes Rad im Rahmen eines elektronischen Stabilitätssystems (ESP), eine niedrige Belastung des elektrischen Generators angeleitet, wodurch der Reifen weicher wird und somit eine verbesserte Bremswirkung entfaltet.

Es versteht sich von selbst, dass eine entsprechende Einstellung einer Radverformung nicht auf die Verwendung des obig beschriebenen Hebelelements beschränkt ist.

Offenbart wird ferner ein System zur Erzeugung einer dynamischen Radeinstellung eines rollenden Rads eines Fahrzeugs, aufweisend einen elektrischen Generator mit einem Rotor und einem Stator, wobei der elektrische Generator konfiguriert ist zur Wandlung von Bewegungsenergie einer Drehung des Rotors in elektrische Energie, wobei ein Drehwiderstand für die Drehung des Rotors als Funktion der Belastung des elektrischen Generators einstellbar ist. Weiter weist das System eine mechanische Aufnahmeeinheit auf, wobei die mechanische Aufnahmeeinheit eine Drehachse aufweist und für eine derartige Anordnung in einem Rad für ein Fahrzeug konfiguriert ist, dass eine Verformung der Lauffläche hin zur Mittelachse des Rades durch die mechanische Aufnahmeeinheit erfasst und in eine Drehbewegung der Drehachse in eine Pump-Drehrichtung gewandelt wird, wobei die mechanische Aufnahmeeinheit konfiguriert ist, als Funktion eines Drehwiderstands der Drehachse in Pump-Drehrichung, einen Widerstand gegen die Verformung der Lauffläche hin zur Mittelachse des Rades auszuüben.

Gemäss der vorliegenden Offenbarung sind die mechanische Aufnahmeeinheit und der elektrische Generator derart angeordnet und konfiguriert, dass die durch die mechanische Aufnahmeeinheit erzeugte Drehbewegung der Drehachse in Pump-Drehrichtung auf den Rotor des elektrischen Generators übertragen und vom elektrischen Generator in elektrische Energie gewandelt wird, und in Pump-Drehrichtung ein definierter Drehwiderstand der Drehachse als Funktion der Belastung des elektrischen Generators eingestellt wird. Wie oben beschrieben weist das System gemäss einer Ausführungsform nun eine Recheneinheit auf, konfiguriert zur Ansteuerung des elektrischen Generators, wobei die Recheneinheit konfiguriert ist, die Belastung des elektrischen Generators als Funktion eines Einstellparameters einzustellen, beispielsweise wobei der Einstellparameter mindestens eines von folgendem umfasst: eine Rotationsgeschwindigkeit des Rades; eine Winkelbeschleunigung des Rades; ein Beschleunigungswert des Fahrzeugs; ein Signal eines Antiblockiersystems des Fahrzeugs, insbesondere wobei das Signal des Antiblockiersystems indikativ ist für einen aktuellen Radschlupfwert des Rades, im Speziellen wobei das Signal des Antiblockiersystems indikativ ist für eine einzustellende Reifenhärte des Reifens für einen Soll-Radschlupfwert; ein Signal einer Fahrdynamikregelung des Fahrzeugs, insbesondere einer elektronischen Stabilitätskontrolle, im Speziellen wobei das Signal der Fahrdynamikregelung indikativ ist für eine einzustellende Reifenhärte des Reifens; und eine Soll-Reifenhärte des Reifens.
Der erfindungsgemässe Energiewandler und das erfindungsgemässe System zur Erzeugung von elektrischer Energie in einem rollenden Rad eines Fahrzeugs werden nachfolgend anhand von in den Zeichnungen schematisch dargestellten Ausführungsbeispielen rein beispielhaft näher beschrieben. Gleiche Elemente sind in den Figuren mit gleichen Bezugszeichen gekennzeichnet. Die beschriebenen Ausführungsformen sind in der Regel nicht massstabsgetreu dargestellt und sie sind auch nicht als Einschränkung zu verstehen.

Im Einzelnen zeigen
- Fig. 1:: eine Seitenansicht eines Schnitts durch ein Fahrzeugrad, ausgestattet mit einer Anordnung von erfindungsgemässen Energiewandlern;
- Fig. 2:: eine im Bereich der Auflagefläche des Rades vergrösserte Seitenansicht eines Schnitts durch ein Fahrzeugrad, ausgestattet mit einer Anordnung von erfindungsgemässen Energiewandlern;
- Fig. 3:: eine Frontalansicht eines Schnitts durch ein Fahrzeugrad, ausgestattet mit einer Anordnung von erfindungsgemässen Energiewandlern;
- Fig. 4:: eine Seitenansicht eines Schnitts durch ein mit einer Anordnung von erfindungsgemässen Energiewandlern ausgestattetes und als Luftlos-Rad ausgebildetes Fahrzeugrad mit einem Reifen aufweisend eine Struktur von flexiblen Speichen;
- Fig. 5:: eine Seitenansicht einer Ausführungsform der Trägerstruktur zur Fixierung einer Vielzahl von erfindungsgemässen Energiewandlern in einer ringförmigen Anordnung, wobei die Trägerstruktur vier separierbare Ringsegmente aufweist;
- Fig. 6:: eine Explosionsdarstellung einer Ausführungsform des erfindungsgemässen Systems aufweisend eine zweiteilige Felge.

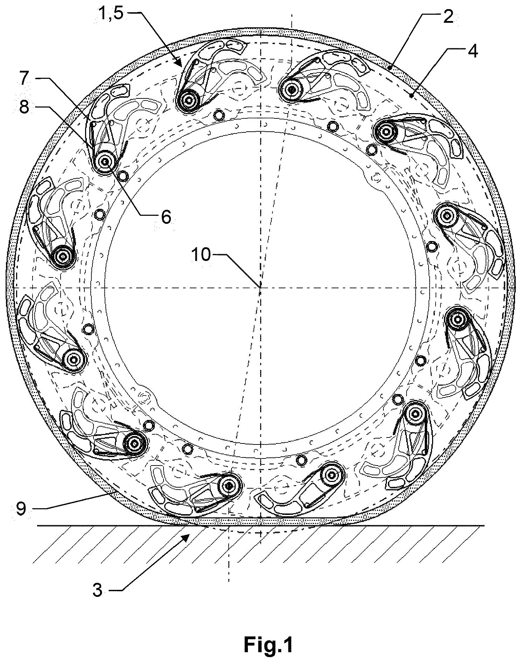

Die **Figur 1** zeigt schematisch eine Seitenansicht eines Schnitts durch ein Fahrzeugrad, ausgestattet mit einer Anordnung von erfindungsgemässen Energiewandlern 1. Das Fahrzeugrad ist beispielsweise ausgebildet mittels eines Luftreifens 2, welcher im Rahmen des Abrollvorgangs unter Belastung im Bereich der Auflagefläche 3 in seinem Querschnitt verformt wird.

Zur Illustration der Reifenverformung ist in der Figur die Reifenform 4 bezüglich eines unbewegten und unbelasteten Rades angedeutet. Daraus ist ersichtlich, dass der Luftreifen 2 einerseits unter Belastung im Bereich der Auflagefläche 3 gestaucht und andererseits durch bei der Drehung des Rades entstehende Fliehkräfte gedehnt wird. Dadurch wird der Reifen gewalkt und es entsteht Reibungswärme, wobei die benötigte Kraft für das Walken des Reifens eine Hauptkomponente des Rollwiderstandes ist und entgegen der Antriebskraft des Fahrzeuges wirkt.

Gemäss der vorliegenden Erfindung wird die Verformung des Reifens 2 im Bereich der Auflagefläche 3 über ein erfindungsgemäss angeordnetes Hebelelement 5 mit einem um eine Drehachse 6 drehbar gelagerten Ausleger 7 in eine Drehbewegung des Auslegers 7 um die Drehachse 6 umgewandelt und über eine Freilauf-Drehkupplung auf einen elektrischen Generator übertragen.

Zum Beispiel ist die Freilauf-Drehkupplung als eine mit der Drehachse 6 zusammenwirkende Freilaufnabe ausgebildet, wobei das Hebelelement 5 eine Feder 8 als Vorspannmittel aufweist, um den Ausleger 7 um die Drehachse 6 in Freilaufrichtung der Freilauf-Drehkupplung vorzuspannen, beispielsweise gegen eine Reifeninnenfläche 9 des Luftreifens 2, wobei die Freilauf-Drehkupplung eine derartige Wirkrichtung aufweist, dass der elektrische Generator durch eine Verformung des Reifens 2 hin zur Mittelachse 10 des Rades angetrieben wird.

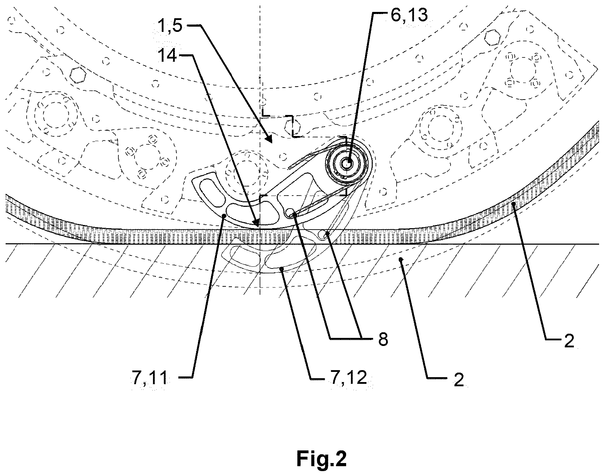

Die **Figur 2** zeigt schematisch eine im Bereich der Auflagefläche 3 des Rades vergrösserte Seitenansicht des in Figur 1 dargestellten Schnitts durch ein Fahrzeugrad, ausgestattet mit einer Anordnung von erfindungsgemässen Energiewandlern 1.

Zur Illustration der Wirkungsweise des Hebelelements 5 ist dieses sowohl bezüglich eines belasteten 11 und eines unbelasteten 12 Zustands des Reifens 2 dargestellt.

Im belasteten Zustand 11 wird der Luftreifen 2 durch das Gewicht des Fahrzeuges beispielsweise bis zu 20 mm oder mehr eingedrückt. Damit der elektrische Generator bereits durch eine solch geringe Auslenkung des Auslegers 7 in Wirkrichtung der Freilauf-Drehkupplung mit einer hohen Drehzahl des Rotors angetrieben wird, kann das Hebelelement 5 beispielsweise ein Getriebe 13 aufweisen, konfiguriert zum Erzeugen einer Übersetzung zwischen der Drehbewegung des Auslegers 7 um die Drehachse 6 und einer Drehbewegung eines Rotors des elektrischen Generators.

Um das Lager und die Freilauf-Drehkupplung zu schützen bzw. zu entlasten, ist der Ausleger 7 beispielsweise derart konfiguriert, dass er bis zu einem gewissen Grad eine Federwirkung gegen eine übermässige Verformung des Luftreifens 2 aufweist, beispielsweise aufgrund von Stössen durch Fahrbahnunebenheiten und/oder durch herumliegende harte Gegenstände auf der Fahrbahn. Zum Beispiel ist ein, mit einem maximalen Kraftwert der auf die Kontaktfläche 14 wirkenden Kraft verknüpfter, maximaler Belastungswert der Freilauf-Drehkupplung und des Lagers vorgegeben, wobei der Ausleger 7 derart konfiguriert ist, beispielsweise mittels geeigneter Materialwahl und Form, dass er in Richtung der auf die Kontaktfläche 14 wirkenden Kraft eine derartige Elastizität aufweist, dass er sich vor Erreichen des maximalen Kraftwerts elastisch verformt und so der maximale Belastungswert stets unterschritten bleibt.

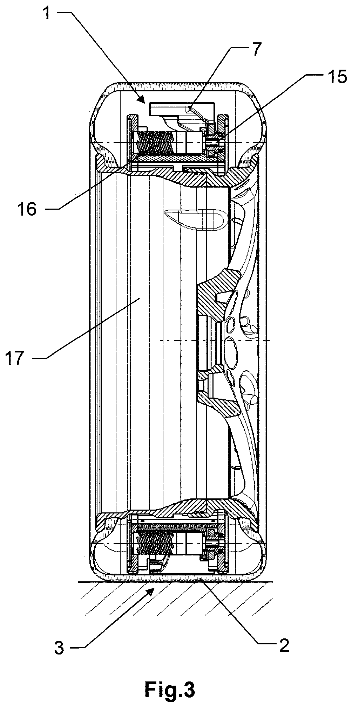

Die **Figur 3** zeigt eine Frontalansicht des in Figur 1 dargestellten Schnitts durch ein Fahrzeugrad, ausgestattet mit einer Anordnung von erfindungsgemässen Energiewandlern 1.

Die Freilauf-Drehkupplung ist hier beispielsweise als ein Freilauf-Kupplungsgetriebe 15 ausgebildet, konfiguriert zum Übertragen einer Drehbewegung des Auslegers 7 auf den Rotor 16 des elektrischen Generators.

Ein Vorteil einer Verwendung eines elektrischen Drehgenerators mit einem sich gegenüber einem Stator drehenden Rotors 16 liegt ferner beispielsweise darin, dass der elektrische Generator derart konfiguriert werden kann, dass ein Drehwiderstand für eine Drehung des Rotors 16 als Funktion der Belastung des elektrischen Generators, d.h. durch Beeinflussung der abgezogenen Strommenge, einstellbar ist. Der Energiewandler 1 kann also derart konfiguriert sein, dass in Pump-Drehrichtung ein definierter Drehwiderstand des Auslegers 7 als Funktion der Belastung des elektrischen Generators eingestellt werden kann, womit als Funktion der Belastung des Generators der Effekt eines "weicheren" oder "härteren" Reifens erzeugt wird.

Beispielsweise kann das erfindungsgemässe System also eine Recheneinheit aufweisen, konfiguriert zur Ansteuerung des elektrischen Generators, so dass gesteuert durch die Recheneinheit ein definierter Rollwiderstand des Rades einstellbar ist, beispielsweise abhängig von einer aktuellen Fahrzeuggeschwindigkeit oder einer aktuellen Fahrsituation.

Zum Beispiel kann der elektrische Generator derart angesteuert werden, dass der Reifen mit steigender Geschwindigkeit und grösserer Belastung des Generators härter wird, was zu einer positiven Fahrstabilität führt und wodurch sich aufgrund des reduzierten Rollwiderstands auch der Energieverbrauch des Fahrzeugs reduziert. Bei einem starken Bremsvorgang, wird der Generator hingegen eine niedrige Belastung des elektrischen Generators angeleitet, wodurch der Reifen weicher wird und sich die Auflagefläche und somit der Traktionskoeffizient des Fahrzeugs erhöht.

Durch den erfindungsgemässen Energiewandler 1 können also die im Stand der Technik bekannten Zielkonflikte, beispielsweise zwischen dem Ausmass der Verformung des Rades für eine optimale Energiegewinnung und der Erhöhung des Traktionskoeffizienten des Fahrzeuges beziehungsweise zwischen einer Herabsetzung des Rollwiderstandes und der Energieausbeute, ohne wesentlichen Zusatzaufwand praktisch automatisch überwunden werden.

Im gezeigten Beispiel sind die erfindungsgemässen Energiewandler 1 jeweils direkt an der Felge 17 des Rades montiert. Alternativ kann das System aber beispielsweise auch eine Trägerstruktur aufweisen, welche konfiguriert ist, eine Vielzahl von Energiewandlern in einer fixen Anordnung zu halten, beispielsweise in einer ringförmigen gleichmässigen Anordnung, wobei beispielsweise die Felge 17 und/oder der Reifen 2 konfiguriert sind für eine fixierte Aufnahme der Trägerstruktur.

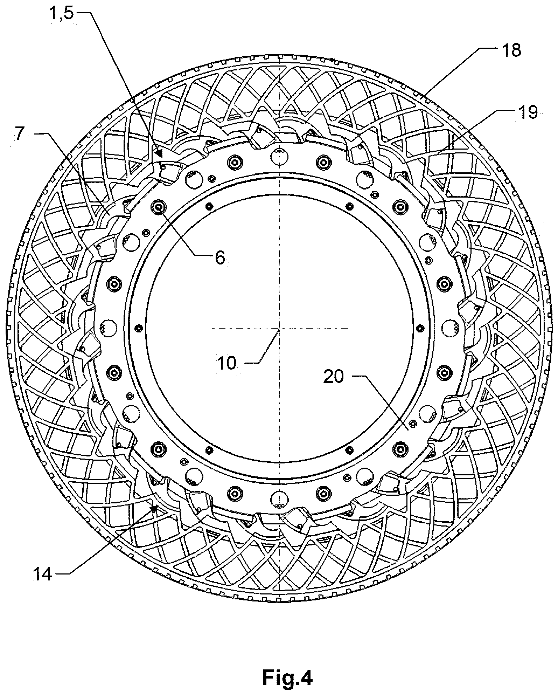

**Figur 4** zeigt schematisch eine Seitenansicht eines Schnitts durch ein Fahrzeugrad gemäss einer weiteren Ausführungsform des erfindungsgemässen Systems, wobei hier eine Vielzahl von Energiewandlern 1 in einem mit einem Luftlos-Reifen 18 ausgebildeten Fahrzeugrad angeordnet sind.

Als Alternative zu luftbefüllten Reifen, bei welchen beispielsweise trotz neuesten Technologien und Gummimischungen Reifenplatzer oder platte Reifen auftreten können, werden in der Fahrzeugindustrie heutzutage oft auch Luftlos-Reifen 18 eingesetzt. Bei Luftlos-Reifen 18 wird das Gewicht des Fahrzeuges auf der Innenseite des Reifens beispielsweise durch eine flexible, federnde Speichenstruktur 19 getragen, beispielsweise eine elastische Polyurethan Struktur.

Das erfindungsgemässe System weist hier eine Vielzahl von Energiewandlern 1 auf, welche von einer ringförmigen Trägerstruktur 20 gehalten werden und mittels der ringförmigen Trägerstruktur 20 derart im Luftlos-Reifen 18 angeordnet sind, dass die jeweiligen Kontaktflächen 14 der Ausleger 7 der erfindungsgemässen Energiewandler 1 einen Kontakt mit einem Teil der flexiblen Speichenstruktur 19 herstellen. Die Anordnung der Energiewandler 1 in der Trägerstruktur 20 beziehungsweise die Anordnung der Trägerstruktur 20 im Luftlos-Reifen 18 ist dabei derart, dass eine Verformung der Lauffläche des Luftlos-Reifens 18 hin zur Mittelachse 10 des Rades über die flexible Speichenstruktur 19 jeweils eine auf die Kontaktflächen 14 der Ausleger 7 wirkende Kraft erzeugt, welche die Ausleger 7 jeweils in Pump-Drehrichtung, beispielsweise hin zur Mittelachse 10 des Rades, um die Drehachse 6 auslenkt.

Ein Vorteil der flexiblen Speichenstruktur 19 besteht ferner beispielsweise darin, dass die Energiewandler 1 derart von der Lauffläche des Rades beabstandet angeordnet werden können, dass die flexible Speichenstruktur 19 gegenüber den Energiewandlern 1 eine Dämpfungswirkung entfaltet, so dass bei übermässigen Verformungen des Reifens 18 insbesondere die Ausleger 7 und ihre Lager sowie die Freilauf-Drehkupplungen entlastet werden.

Ferner können mit einer erfindungsgemässen Energiewandler-Anordnung ausgestattete Luftlos-Reifen beispielsweise derart konzipiert sein, dass bei abgefahrenem Reifenprofil jeweils - wie typischerweise bei Lastwagenreifen - lediglich eine neue Lauffläche auf die die Energiewandler 1 enthaltende flexible Speichenstruktur 19 aufgezogen wird. Somit muss also jeweils nicht der ganze Reifen ausgewechselt werden, wodurch beispielsweise die Unterhaltskosten pro Rad reduziert werden.

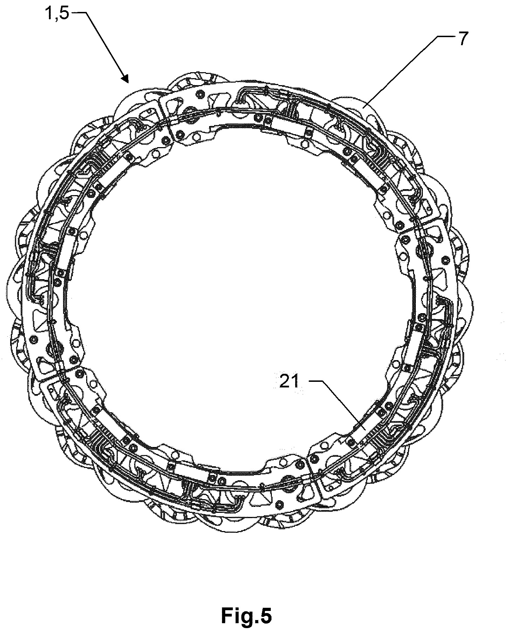

Die **Figur 5** zeigt eine Seitenansicht einer weiteren Ausführungsform der Trägerstruktur zur Fixierung einer Vielzahl von erfindungsgemässen Energiewandlern 1 in einer ringförmigen Anordnung, wobei hier die Trägerstruktur vier separierbare Ringsegmente 21 aufweist.

Zum Beispiel wird durch die Ausgestaltung der Trägerstruktur mittels mehreren Ringsegmenten 21 die Montage auf eine Felge, beispielsweise eine mehrteilige Felge, und/oder in einem Fahrzeugreifen erleichtert. Ferner können beispielsweise bei Defekten der Energiewandler 1, beispielsweise aufgrund von übermässigen Stössen beschädigte Ausleger 7 und/oder Lager, mit geringem und einfachem Montageaufwand ersetzt werden.

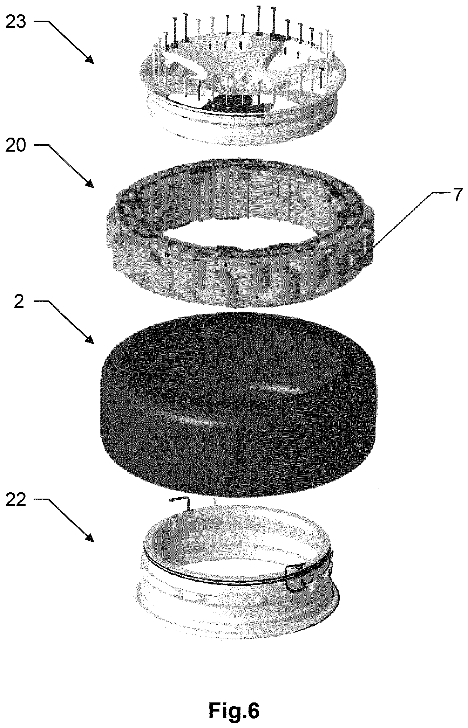

Der Montageaufwand kann beispielsweise weiter vereinfacht werden, indem die Trägerstruktur 20 wie in **Figur 6** dargestellt für eine Aufnahme in einer mehrteiligen, beispielsweise einer zweiteiligen, Felge konfiguriert ist.

Gemäss dieser Ausführungsform weist die Trägerstruktur 20 Schnittstellen zur fixierten Montage auf ein mit einer Felgenhülse 22 zur Aufnahme eines Luftreifens 2 zusammenwirkendes Felgenbett 23 auf.

Es versteht sich, dass diese dargestellten Figuren nur mögliche Ausführungsbeispiele schematisch darstellen. Die verschiedenen Ansätze können ebenso miteinander sowie mit Verfahren des Stands der Technik kombiniert werden.

## Patentansprüche

1. System zur Erzeugung von elektrischer Energie in einem rollenden Rad eines Fahrzeugs, mit
• einem Energiewandler (1) zur Erzeugung von elektrischer Energie in einem rollenden Rad eines Fahrzeugs unter Ausnutzung der elastischen Verformung des Rades zwischen Fahrebene und Mittelachse des Rades, und
• einer Trägerstruktur (17,20) konfiguriert um den Energiewandler (1) in einer fixen Anordnung um die Mittelachse (10) des Rades zu halten,
wobei
der Energiewandler (1) aufweist
• ein Hebelelement (5) mit einem um eine Drehachse (6) drehbar gelagerten Ausleger (7), wobei das Hebelelement (5) für eine derartige Anordnung in einem Rad für ein Fahrzeug konfiguriert ist, dass
∘ eine Verformung der Lauffläche hin zur Mittelachse (10) des Rades eine auf eine Kontaktfläche (14) des Auslegers (7) wirkende Kraft erzeugt, und
∘ die auf die Kontaktfläche (14) wirkende Kraft eine Drehbewegung des Auslegers (7) in eine Pump-Drehrichtung um die Drehachse (6) bewirkt,
• eine Freilauf-Drehkupplung (15) konfiguriert zur drehrichtungsabhängigen Kupplung, aufweisend eine Kupplungsrichtung zur Herstellung einer wirkenden Kupplung und eine Freilaufrichtung, und
• einen elektrischen Generator mit einem Rotor (16) und einem Stator, wobei der elektrische Generator konfiguriert ist zur Wandlung von Bewegungsenergie einer Drehung des Rotors (16) in elektrische Energie, wobei
• das Hebelelement (5), die Freilauf-Drehkupplung (15) und der elektrische Generator derart angeordnet und konfiguriert sind, dass die Drehbewegung des Auslegers (7) in Pump-Drehrichtung über die Freilauf-Drehkupplung (15) in Kupplungsrichtung auf den Rotor (16) des elektrischen Generators übertragen und vom elektrischen Generator in elektrische Energie gewandelt wird,
**dadurch gekennzeichnet, dass**
• das System eine Vielzahl von Energiewandlern (1) aufweist, und
• die Trägerstruktur (17,20) konfiguriert ist, die Vielzahl von Energiewandlern (1) in einer ringförmigen gleichmässigen Anordnung zu fixieren.

2. System nach Anspruch 1,
**dadurch gekennzeichnet, dass**
der Energiewandler (1) ein Vorspannmittel (8) aufweist, insbesondere eine Feder, konfiguriert um den Ausleger (7) um die Drehachse (6) in Freilaufrichtung der Freilauf-Drehkupplung (15) und insbesondere mit der Kontaktfläche (14) in Richtung zur Lauffläche vorzuspannen, insbesondere wobei die Freilauf-Drehkupplung (15) als eine mit der Drehachse (6) zusammenwirkende Freilaufnabe ausgebildet ist.

3. System nach Anspruch 1 oder 2,
**dadurch gekennzeichnet, dass**
der Energiewandler (1) ein Getriebe (13,15) aufweist, konfiguriert zum Erzeugen einer definierten Übersetzung zwischen der Drehbewegung des Auslegers (7) in Pump-Drehrichtung und einer Drehbewegung des Rotors (16) des elektrischen Generators,
insbesondere wobei das Getriebe (13,15) konfiguriert ist, zwischen der Drehbewegung des Auslegers (7) und der Drehbewegung des Rotors (16) eine Übersetzung ins Schnelle, insbesondere von mindestens einem Verhältnis 1 zu 10, im Speziellen von mindestens einem Verhältnis 1 zu 100, zu erzeugen.

4. System nach einem der Ansprüche 1 bis 3,
**dadurch gekennzeichnet, dass**
der Energiewandler (1) derart konfiguriert ist, dass
• die Kontaktfläche (14) des Auslegers (7) ausgelegt ist zur Herstellung eines Kontakts mit einer Reifeninnenfläche (9) des Rades, insbesondere wobei die Kontaktfläche (14) ausgelegt ist zur Herstellung eines Kontakts mit einem Teil einer flexiblen Speichenstruktur (19) des Rades, oder
• die Kontaktfläche (14) des Auslegers (7) zumindest einen Teil der Lauffläche des Rades bildet.

5. System nach einem der vorhergehenden Ansprüche,
**gekennzeichnet durch**
einen vorgegebenen, mit einem maximalen Kraftwert der auf die Kontaktfläche (14) wirkenden Kraft verknüpften, maximalen Belastungswert
• der Freilauf-Drehkupplung (15), und/oder
• des elektrischen Generators, und/oder
• eines Drehlagers, mittels welchem der Ausleger (7) drehbar gelagert ist, und/oder
• insbesondere des Getriebes (13,15),
wobei der Ausleger (7) in Richtung der auf die Kontaktfläche (14) wirkenden Kraft eine derartige Elastizität aufweist, dass sich der Ausleger (7) innerhalb eines Toleranzbereichs vor Erreichen des maximalen Kraftwerts elastisch verformt und der maximale Belastungswert stets unterschritten bleibt.

6. System nach einem der vorhergehenden Ansprüche,
**dadurch gekennzeichnet, dass**
die Trägerstruktur (20) mindestens zwei separierbare Ringsegmente (21) aufweist, jeweils konfiguriert zum Fixieren von je einem Anteil der Vielzahl von Energiewandlern (1).

7. System nach einem der vorhergehenden Ansprüche,
**dadurch gekennzeichnet, dass**
• die Trägerstruktur als Felge (17) des Rades ausgebildet ist, oder
• das System eine Felge (17) des Rades aufweist, konfiguriert für eine fixierte Aufnahme der Trägerstruktur (20).

8. System nach Anspruch 7,
**dadurch gekennzeichnet, dass**
das System eine mehrteilige Felge (17) aufweist, insbesondere ausgebildet als zweiteilige Felge, aufweisend ein Felgenbett (23) und eine Felgenhülse (22), oder als dreiteilige Felge, aufweisend ein Felgenbett (23), eine Felgenhülse (22) und einen Felgenstern,
insbesondere wobei die Trägerstruktur (20) und die mehrteilige Felge (17) konfiguriert sind, dass die Trägerstruktur (20) auf ein Felgenbett (23) der mehrteiligen Felge montiert ist.

9. System nach einem der vorhergehenden Ansprüche,
**dadurch gekennzeichnet, dass**
der Energiewandler (1) und die Trägerstruktur (17,20) derart konfiguriert sind, dass die Kontaktfläche (14) des Auslegers (7) zumindest einen Teil der Lauffläche des Rades bildet.

10. System nach einem der vorhergehenden Ansprüche,
**dadurch gekennzeichnet, dass**
• die Trägerstruktur als Reifen (2,18) des Rades ausgebildet ist, oder
• das System einen Reifen (2,18) des Rades aufweist, wobei die Trägerstruktur (17,20) und der Reifen (2,18) konfiguriert sind, dass durch eine Verformung der Lauffläche des Rades ein Kontakt zwischen der Kontaktfläche (14) des Auslegers (7) mit einer Reifeninnenfläche (9) des Reifens (2,18) hergestellt werden kann, insbesondere wobei zumindest ein Teil der Kontaktfläche (14) des Auslegers (7) mit einem Teil der Reifeninnenfläche (9) in Kontakt steht.

11. System nach Anspruch 10,
**dadurch gekennzeichnet, dass**
• der Reifen (18) eine Struktur von flexiblen Speichen (19) aufweist, insbesondere eine elastische Polyurethan Struktur, und
• die Kontaktfläche (14) und der Reifen (18) konfiguriert sind zur Herstellung eines Kontakts von zumindest einem Teil der Kontaktfläche (14) mit einem Teil der flexiblen Speichenstruktur (19),
insbesondere wobei der Reifen (18) konfiguriert ist als Luftlos-Reifen.

12. System nach einem der vorhergehenden Ansprüche,
**dadurch gekennzeichnet, dass**
• das System eine Recheneinheit aufweist, konfiguriert zur Ansteuerung des elektrischen Generators, und
• die Recheneinheit konfiguriert ist, die Belastung des elektrischen Generators als Funktion eines Einstellparameters einzustellen,
insbesondere wobei der Einstellparameter mindestens eines von folgendem umfasst
• eine Rotationsgeschwindigkeit des Rades,
• eine Winkelbeschleunigung des Rades,
• ein Beschleunigungswert des Fahrzeugs, und
• ein Rekuperationsparameter einer vom elektrischen Generator aufgeladenen Batterie des Fahrzeugs, insbesondere ein Ladezustand der Batterie des Fahrzeugs.

13. System nach Anspruch 12,
**dadurch gekennzeichnet, dass**
• der elektrische Generator konfiguriert ist, dass ein Drehwiderstand für eine Drehung des Rotors (16) als Funktion der Belastung des elektrischen Generators einstellbar ist, und
• der Energiewandler (1) konfiguriert ist, in Pump-Drehrichtung einen definierten Drehwiderstand des Auslegers (7) als Funktion der Belastung des elektrischen Generators einzustellen,
insbesondere wobei die Recheneinheit konfiguriert ist, mittels des Einstellparameters einen definierten Rollwiderstand des Rades einzustellen, im Speziellen wobei der Einstellparameter mindestens eines von folgendem umfasst
• ein Signal eines Antiblockiersystems des Fahrzeugs, insbesondere wobei das Signal des Antiblockiersystems indikativ ist für einen aktuellen Radschlupfwert des Rades, im Speziellen wobei das Signal des Antiblockiersystems indikativ ist für eine einzustellende Reifenhärte des Reifens (2,18) für einen Soll-Radschlupfwert,
• ein Signal einer Fahrdynamikregelung des Fahrzeugs, insbesondere einer elektronischen Stabilitätskontrolle, im Speziellen wobei das Signal der Fahrdynamikregelung indikativ ist für eine einzustellende Reifenhärte des Reifens (2,18), und
• eine Soll-Reifenhärte des Reifens.

## Claims

1. System for generating electrical energy in a rolling wheel of a vehicle, comprising
• an energy converter (1) for generating electrical energy in a rolling wheel of a vehicle by utilizing the elastic deformation of the wheel between the driving plane and the central axis of the wheel, and
• a support structure (17, 20) configured to hold the energy converter (1) in a fixed arrangement about the central axis (10) of the wheel,
wherein
the energy converter (1) comprises
• a lever element (5) having a cantilever (7) rotatably mounted about an axis of rotation (6), wherein the lever element (5) is configured for such an arrangement in a wheel for a vehicle that
∘ a deformation of the tread towards the central axis (10) of the wheel generates a force acting on a contact surface (14) of the cantilever (7), and
∘ the force acting on the contact surface (14) causes a rotary movement of the cantilever (7) in a pumping direction of rotation about the axis of rotation (6),
• a freewheeling rotary coupling (15) configured for coupling depending on the direction of rotation, comprising a coupling direction for establishing an acting coupling and a freewheeling direction, and
• an electrical generator having a rotor (16) and a stator, wherein the electrical generator is configured to convert kinetic energy of a rotation of the rotor (16) into electrical energy,
wherein
• the lever element (5), the freewheeling rotary coupling (15) and the electric generator are arranged and configured in such a way that the rotary movement of the cantilever (7) in the pumping direction of rotation is transmitted via the freewheeling rotary coupling (15) in the coupling direction onto the rotor (16) of the electric generator and is converted into electric energy by the electric generator,
**characterized in that**
• the system comprises a plurality of energy converters (1), and
• the support structure (17, 20) is configured to fix the plurality of energy converters (1) in an annular uniform arrangement.

2. System according to claim 1, **characterized in that** the energy converter (1) has a pretensioning means (8), in particular a spring, configured to pretension the cantilever (7) about the axis of rotation (6) in the freewheeling direction of the freewheeling rotary coupling (15) and in particular with the contact surface (14) in the direction towards the tread, in particular wherein the freewheeling rotary coupling (15) is designed as a freewheeling hub cooperating with the axis of rotation (6).

3. System according to claim 1 or 2, **characterized in that** the energy converter (1) comprises a transmission (13, 15) configured to generate a defined transmission ratio between the rotary motion of the cantilever (7) in the pumping direction of rotation and a rotary motion of the rotor (16) of the electric generator,
in particular wherein the transmission (13, 15) is configured to generate a transmission ratio into high speed, in particular of at least a ratio 1 to 10, especially of at least a ratio 1 to 100, between the rotary motion of the cantilever (7) and the rotary motion of the rotor (16).

4. System according to one of claims 1 to 3, **characterized in that** the energy converter (1) is configured such that
• the contact surface (14) of the cantilever (7) is adapted to produce a contact with an inner tire surface (9) of the wheel, in particular wherein the contact surface (14) is adapted to produce a contact with a part of a flexible spoke structure (19) of the wheel, or
• the contact surface (14) of the cantilever (7) forms at least part of the tread of the wheel.

5. System according to one of the preceding claims, **characterized by** a predetermined maximum load value of
• the freewheeling rotary coupling (15), and/or
• the electrical generator, and/or
• a pivot bearing, by means of which the cantilever (7) is rotatably mounted, and/or
• particularly the transmission (13, 15),
said predetermined maximum load value being associated with a maximum force value of the force acting on the contact surface (14),
wherein the cantilever (7) has such elasticity in the direction of the force acting on the contact surface (14) that the cantilever (7) deforms elastically within a tolerance range before reaching the maximum force value and the maximum load value is never exceeded.

6. System according to one of the preceding claims, **characterized in that** the support structure (20) comprises at least two separable ring segments (21), each configured to fix a respective portion of the plurality of energy converters (1).

7. System according to one of the preceding claims, **characterized in that**
• the support structure is formed as a rim (17) of the wheel, or
• the system includes a rim (17) of the wheel configured to fixedly receive the support structure (20).

8. System according to claim 7, **characterized in that** the system comprises a multi-part rim (17), in particular formed as a two-part rim comprising a rim bed (23) and a rim sleeve (22), or as a three-part rim comprising a rim bed (23), a rim sleeve (22) and a rim star,
in particular wherein the support structure (20) and the multi-part rim (17) are configured such that the support structure (20) is mounted on a rim bed (23) of the multi-part rim.

9. System according to one of the preceding claims, **characterized in that** the energy converter (1) and the support structure (17, 20) are configured such that the contact surface (14) of the cantilever (7) forms at least part of the tread of the wheel.

10. System according to one of the preceding claims, **characterized in that**
• the support structure is formed as a tire (2, 18) of the wheel, or
• the system comprises a tire (2, 18) of the wheel, wherein the support structure (17, 20) and the tire (2, 18) are configured such that a contact between the contact surface (14) of the cantilever (7) with a tire inner surface (9) of the tire (2, 18) can be produced by a deformation of the tread of the wheel, in particular wherein at least a part of the contact surface (14) of the cantilever (7) is in contact with a part of the tire inner surface (9).

11. System according to claim 10, **characterized in that**
• the tire (18) has a structure of flexible spokes (19), in particular an elastic polyurethane structure, and
• the contact surface (14) and the tire (18) are configured for producing a contact of at least a portion of the contact surface (14) with a portion of the flexible spoke structure (19),
in particular wherein the tire (18) is configured as an airless tire.

12. System according to one of the preceding claims, **characterized in that**
• the system comprises a computing unit configured to control the electrical generator, and
• the computing unit is configured to set the load of the electrical generator as a function of a setting parameter,
in particular wherein the setting parameter comprises at least one of the following:
• a rotational speed of the wheel,
• an angular acceleration of the wheel,
• an acceleration value of the vehicle, and
• a recuperation parameter of a battery of the vehicle charged by the electric generator, in particular a state of charge of the battery of the vehicle.

13. System according to claim 12, **characterized in that**
• the electrical generator is configured such that a rotational resistance for a rotation of the rotor (16) is adjustable as a function of the load on the electrical generator, and
• the energy converter (1) is configured to set a defined rotational resistance of the cantilever (7) in the pumping direction of rotation as a function of the load on the electrical generator,
in particular wherein the computing unit is configured to set a defined rolling resistance of the wheel by means of the setting parameter, especially wherein the setting parameter comprises at least one of the following:
• a signal of an anti-lock braking system of the vehicle, in particular wherein the signal of the anti-lock braking system is indicative of a current wheel slip value of the wheel, especially wherein the signal of the anti-lock braking system is indicative of a tire hardness of the tire (2,18) to be adjusted for a target wheel slip value,
• a signal of a driving dynamics control of the vehicle, in particular of an electronic stability control, especially wherein the signal of the driving dynamics control is indicative for a tire hardness of the tire (2, 18) to be adjusted, and
• a target tire hardness of the tire.

## Revendications

1. Système pour générer de l'énergie électrique dans une roue en rotation d'un véhicule, comprenant
• un convertisseur d'énergie (1) pour générer de l'énergie électrique dans une roue en rotation d'un véhicule en utilisant la déformation élastique de la roue entre le plan de roulement et l'axe central de la roue, et
• une structure de support (17, 20) configurée pour maintenir le convertisseur d'énergie (1) dans une disposition fixe autour de l'axe central (10) de la roue,
dans lequel
le convertisseur d'énergie (1) présente
• un élément formant levier (5) avec un bras en porte-à-faux (7) supporté de manière rotative autour d'un axe de rotation (6), l'élément formant levier (5) étant configuré pour être disposé dans une roue d'un véhicule de telle sorte que
o une déformation de la surface de roulement vers l'axe central (10) de la roue génère une force agissant sur une surface de contact (14) du bras en porte-à-faux (7), et
o la force agissant sur la surface de contact (14) provoque un mouvement de rotation du bras en porte-à-faux (7) dans un sens de rotation de pompage autour de l'axe de rotation (6),
• un accouplement rotatif à roue libre (15) configuré pour s'accoupler en fonction du sens de rotation, présentant un sens d'accouplement destiné à réaliser un accouplement actif et un sens de roue libre, et
• un générateur électrique avec un rotor (16) et un stator, le générateur électrique étant configuré pour convertir l'énergie cinétique d'une rotation du rotor (16) en énergie électrique,
dans lequel
• l'élément formant levier (5), l'accouplement rotatif à roue libre (15) et le générateur électrique sont disposés et configurés de telle sorte que le mouvement de rotation du bras en porte-à-faux (7) dans le sens de rotation de pompage est transmis au rotor (16) du générateur électrique par l'accouplement rotatif à roue libre (15) dans le sens d'accouplement et est converti en énergie électrique par le générateur électrique,
**caractérisé en ce que**
• le système présente une pluralité de convertisseurs d'énergie (1), et
• la structure de support (17, 20) est configurée pour fixer la pluralité de convertisseurs d'énergie (1) dans une disposition annulaire régulière.

2. Système selon la revendication 1,
**caractérisé en ce que**
le convertisseur d'énergie (1) comprend un moyen de précontrainte (8), en particulier un ressort, configuré pour précontraindre le bras en porte-à-faux (7) autour de l'axe de rotation (6) dans le sens de roue libre de l'accouplement rotatif à roue libre (15) et en particulier avec la surface de contact (14) en direction de la surface de roulement, en particulier dans lequel l'accouplement rotatif à roue libre (15) est réalisé sous la forme d'un moyeu à roue libre coopérant avec l'axe de rotation (6).

3. Système selon la revendication 1 ou 2,
**caractérisé en ce que**
le convertisseur d'énergie (1) présente une transmission (13, 15) configurée pour générer un rapport de transmission défini entre le mouvement de rotation du bras en porte-à-faux (7) dans le sens de rotation de pompage et un mouvement de rotation du rotor (16) du générateur électrique,
en particulier dans lequel la transmission (13, 15) est configurée pour générer un rapport de multiplication, en particulier au moins un rapport de 1 à 10, plus particulièrement au moins un rapport de 1 à 100, entre le mouvement de rotation du bras en porte-à-faux (7) et le mouvement de rotation du rotor (16).

4. Système selon l'une des revendications 1 à 3,
**caractérisé en ce que**
le convertisseur d'énergie (1) est configuré de telle sorte que
• la surface de contact (14) du bras en porte-à-faux (7) est conçue pour réaliser un contact avec une surface intérieure de pneu (9) de la roue, en particulier dans lequel la surface de contact (14) est conçue pour réaliser un contact avec une partie d'une structure de rayons flexibles (19) de la roue, ou
• la surface de contact (14) du bras en porte-à-faux (7) forme au moins une partie de la surface de roulement de la roue.

5. Système selon l'une des revendications précédentes,
**caractérisé par**
une valeur de charge maximale prédéfinie, associée à une valeur de force maximale de la force agissant sur la surface de contact (14),
• de l'accouplement rotatif à roue libre (15), et/ou
• du générateur électrique, et/ou
• d'un palier de rotation au moyen duquel le bras en porte-à-faux (7) est supporté de manière rotative, et/ou
• en particulier de la transmission (13, 15),
dans lequel le bras en porte-à-faux (7) présente dans la direction de la force agissant sur la surface de contact (14) une élasticité telle que le bras en porte-à-faux (7) se déforme élastiquement dans une plage de tolérance avant d'atteindre la valeur de force maximale et que la valeur de charge maximale ne soit jamais atteinte.

6. Système selon l'une des revendications précédentes,
**caractérisé en ce que**
la structure de support (20) présente au moins deux segments annulaires séparables (21), chacun configuré pour fixer une partie respective de la pluralité de convertisseurs d'énergie (1) .

7. Système selon l'une des revendications précédentes,
**caractérisé en ce que**
• la structure de support est réalisée sous la forme d'une jante (17) de la roue, ou
• le système présente une jante (17) de la roue, configurée pour recevoir de manière fixe la structure de support (20).

8. Système selon la revendication 7,
**caractérisé en ce que**
le système présente une jante en plusieurs parties (17), en particulier réalisée sous la forme d'une jante en deux parties présentant une base de jante (23) et un manchon de jante (22), ou sous la forme d'une jante en trois parties présentant une base de jante (23), un manchon de jante (22) et une étoile de jante,
en particulier dans lequel la structure de support (20) et la jante en plusieurs parties (17) sont configurées de telle sorte que la structure de support (20) est montée sur une base de jante (23) de la jante en plusieurs parties.

9. Système selon l'une des revendications précédentes,
**caractérisé en ce que**
le convertisseur d'énergie (1) et la structure de support (17, 20) sont configurés de telle sorte que la surface de contact (14) du bras en porte-à-faux (7) forme au moins une partie de la surface de roulement de la roue.

10. Système selon l'une des revendications précédentes,
**caractérisé en ce que**
• la structure de support est réalisée sous la forme d'un pneu (2, 18) de la roue, ou
• le système présente un pneu (2, 18) de la roue, dans lequel la structure de support (17, 20) et le pneu (2, 18) sont configurés de telle sorte que, par une déformation de la surface de roulement de la roue, un contact peut être établi entre la surface de contact (14) du bras en porte-à-faux (7) et une surface intérieure de pneu (9) du pneu (2, 18), en particulier dans lequel au moins une partie de la surface de contact (14) du bras en porte-à-faux (7) est en contact avec une partie de la surface intérieure de pneu (9) .

11. Système selon la revendication 10,
**caractérisé en ce que**
• le pneu (18) présente une structure de rayons flexibles (19), en particulier une structure en polyuréthane élastique, et
• la surface de contact (14) et le pneu (18) sont configurés pour établir un contact entre au moins une partie de la surface de contact (14) et une partie de la structure de rayons flexibles (19),
en particulier dans lequel le pneu (18) est configuré comme un pneu sans air.

12. Système selon l'une des revendications précédentes,
**caractérisé en ce que**
• le système présente une unité de calcul configurée pour commander le générateur électrique, et
• l'unité de calcul est configurée pour régler la charge du générateur électrique en fonction d'un paramètre de réglage,
en particulier dans lequel le paramètre de réglage comprend au moins l'un des suivants :
• une vitesse de rotation de la roue,
• une accélération angulaire de la roue,
• une valeur d'accélération du véhicule, et
• un paramètre de récupération d'une batterie du véhicule chargée par le générateur électrique, en particulier un état de charge de la batterie du véhicule.

13. Système selon la revendication 12,
**caractérisé en ce que**
• le générateur électrique est configuré de telle sorte qu'une résistance à la rotation pour une rotation du rotor (16) en fonction de la charge du générateur électrique peut être réglée, et
• le convertisseur d'énergie (1) est configuré pour régler, dans le sens de rotation de pompage, une résistance à la rotation définie du bras en porte-à-faux (7) en fonction de la charge du générateur électrique,
en particulier dans lequel l'unité de calcul est configurée pour régler une résistance au roulement définie de la roue au moyen du paramètre de réglage, plus particulièrement dans lequel le paramètre de réglage comprend au moins l'un des suivants :
• un signal d'un système de freinage antiblocage du véhicule, en particulier dans lequel le signal du système de freinage antiblocage est indicatif d'une valeur de patinage de roue actuelle de la roue, plus particulièrement dans lequel le signal du système de freinage antiblocage est indicatif d'une dureté de pneu à régler du pneu (2, 18) pour une valeur de patinage de roue de consigne,
• un signal d'une régulation de la dynamique de conduite du véhicule, en particulier d'un contrôle électronique de stabilité, plus particulièrement dans lequel le signal de la régulation de la dynamique de conduite est indicatif d'une dureté de pneu à régler du pneu (2, 18), et
• une dureté de pneu de consigne du pneu.
